# EUROPEAN PATENT SPECIFICATION

(11) **EP 2 703 424 B1**
(45) Date of publication and mention of the grant of the patent: **18.12.2019**
(21) Application number: 12382334.6
(22) Date of filing: 29.08.2012
(51) Int. Cl.: C08G 64/30

(54) **Process for the production of melt polycarbonate compositions**
Verfahren zur Herstellung von Schmelzpolycarbonatzusammensetzungen
Processus de production de compositions de polycarbonate fondu

(43) Date of publication of application: 05.03.2014
(60) Divisional application: 19155124.1
(73) Proprietor: SABIC Global Technologies B.V., 4612 PX Bergen op Zoom (NL)
(72) Inventor: Vic Fernández, Ignacio, E-30390 La Aljorra (ES)
(74) Representative: Stiebe, Lars Magnus

(56) References cited:
- EP-A1- 2 354 175
- JP-A- 6 234 845
- US-A- 5 364 926
- US-A1- 2002 032 299
- US-A1- 2003 027 941
- US-A1- 2003 120 023
- US-B1- 6 197 917
- US-B1- 6 455 667

## Description

### TECHNICAL FIELD

This disclosure generally relates to the production of melt polycarbonate.

### BACKGROUND

An advantage of melt polymerization of polycarbonate is that it can be performed in a continuous polymerization. During the melt polymerization of polycarbonate though, a polycarbonate gel can form in the composition due to branching of the polycarbonate chains, resulting in very high molecular weight (e.g., greater than 80,000 Daltons as determined on a polystyrene basis) polycarbonate chains. The polycarbonate gel is generally not soluble in the polycarbonate composition and can cause not only a bad physical appearance of polycarbonate for optical applications but can also affect some properties in polycarbonate compositions such as impact resistance. After extrusion, the polycarbonate composition is therefore filtered to remove the gels and other impurities.

Many additives cannot be added to the polycarbonate during the melt polymerization process since they will be removed by the filters. The addition of certain fillers or certain additives that are either larger than the mesh size of the melt filter or that are not soluble in polycarbonate composition will therefore be removed from the polycarbonate composition during the melt filtration step. Attempts to incorporate such additives during the extrusion step have resulted in the plugging of the melt filter and/or incorrect formulation of the final product. Thus, melt polycarbonate plants typically produce only transparent products in so called natural colors.

U.S. Application 2003/120023 discloses a process for producing an aromatic polycarbonate by melt-polycondensation, comprising feeding a molten polycondensate continuously into a shaft seal portion of a self-lubricating gear pump disposed for transporting the polycondensate from a polycondensation vessel.

JP Publication 06234845 discloses a method of producing aromatic polycarbonate using at least two reactors in series and subjecting an aromatic dihydroxy compound and a carbonic acid diester to melt polymerization, an outlet of a reactor before the final reactor and an outles of the final reactor are provided with at least one filter, respectively.

US Patent 6,455,667 discloses a method for manufacturing polycarbonate wherein the molten polycarbonate is filtered through a passivation treated metal filter.

U.S. 6,197,917 discloses a method for the manufacture of a polycarbonate by the melt polycondensation of a bisphenol and a carbonic diester, wherein the molten mixture of a bisphenol and a carbonic diester is filtered with a membrane filter made of a fluororesin, after which melt polycondensation is conducted.

U.S. 5,364,926 discloses a method for preparing optical-grade polycarbonate compositions comprising the metl-polycondensation of an aromatic dihydroxy compound and a diester carbonate in the presence of a catalyst.

U.S. Application 2002/032299 discloses a method for producing an aromatic polycarbonate resin mainly by melt polycondensation, wherein the reaction mixture is transferred between reactors or discharged from the reactor in a hot molten state and the molten reaction mixture is exposed to high temperature during the transfer between reactors or the discharge from the reactor.

EP 2 354 175 relates to a method of producing a polycarbonate comprising mixing a dihydroxy compound ingredient with a molten carbonic acid diester.

U.S. Application 2003/027941 discloses a method to produce a polycarbonate having a low OH terminal content by using an ester exchange reaction.

A melt polymerization process that would allow for the incorporation of larger sized additives is therefore desirable.

### SUMMARY

Disclosed herein are methods for making melt polycarbonate compositions and systems for making melt polycarbonate compositions.

In an embodiment, a melt polymerization process for the manufacture of a polycarbonate composition can comprise (or can consist of), in the following order: melt polymerizing a dihydroxy reactant and a carbonate compound to produce a molten reaction product; quenching the molten reaction product upstream of all extruders; filtering the molten reaction product in a melt filter; introducing an additive to form a mixture; and extruding the mixture to form a polycarbonate composition.

The above described and other features are exemplified by the following figures and detailed description.

### BRIEF DESCRIPTION OF THE DRAWINGS

The following is a brief description of the drawings wherein like elements are numbered alike and which are presented for the purposes of illustrating the exemplary embodiments disclosed herein and not for the purposes of limiting the same.
FIG. 1 schematically depicts a plant design for the production of polycarbonate where the polycarbonate is melt filtered after being extruded;
FIG. 2 schematically depicts a plant design for the production of polycarbonate where the polycarbonate is melt filtered before being extruded; and
FIG. 3 is a graphical illustration of the amount of time it takes to achieve 95 % of the L value in experiments performed with and without a melt filter as described in Example 1.

### DETAILED DESCRIPTION

A typical melt polymerization plant utilizes an in-line polymerization unit that extrudes the polycarbonate with for example, a quencher and/or additives, to form a polycarbonate composition, passes the extrudate through a melt filter via a melt pump to remove gels and other impurities. Since the polycarbonate needed to be quenched (which included mixing the polycarbonate product with the quencher in an extruder) to prevent the formation of additional gels, the melt filter was located after the extruder where the polycarbonate and quencher were mixed. In this configuration, however, additives that are not soluble in the polycarbonate and/or that have a particle size larger than that of the melt filter, such as some glass powder fillers, some metal powder fillers and some flame retardant additives like potassium-3-(phenylsulfonyl)benzenesulfonate) (KSS) and polytetrafluoroethylene-styrene-acrylonitrile resin (TSAN) cannot be used due to plugging of the melt filter. For those additives that are "melt filter-compatible" such as, in the case of darker colors, acrylonitrile-butadiene-styrene (ABS)/styrene-acrylonitrile (SAN), the residence time added by the melt filter and melt pump causes substantial transition time when changing to different colors and results in an increase in the amount of material that needs to pass through the melt filter. Due to the aforementioned reasons, to be commercially viable, melt polycarbonate plants are generally restricted to the production of transparent polycarbonate compositions.

The Applicants surprisingly found that the melt polymerization plant could be reconfigured such that the melt filter can be located prior to at least one extruder instead of after it. In other words, before the polycarbonate is pelletized, it can be melt filtered, combined with additives, extruded, and then pelletized. Such a reconfiguration allows for the filtration of the polycarbonate to remove, for example, gels and impurities, prior to extrusion while allowing for the addition of fillers and additives to the polycarbonate in the extruder that would have otherwise been filtered out by the melt filter. The filtering of the polycarbonate prior to the addition of an additive allows for less material to be filtered, thereby potentially reducing the residence time in the polymerization unit, reducing the amount of material passing through the filter (e.g., an hence extending the filter's life per unit of polycarbonate) and ultimately enabling an economic benefit.

A "polycarbonate" means compositions having repeating structural carbonate units of formula (1) 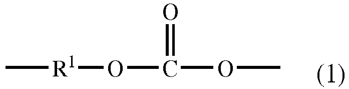 in which at least 60 percent of the total number of R¹ groups contain aromatic moieties and the balance thereof are aliphatic, alicyclic, or aromatic. Each R¹ can be a C₆₋₃₀ aromatic group, that is, contains at least one aromatic moiety. R¹ can be derived from a dihydroxy compound of the formula HO-R¹-OH, in particular of formula (2)

HO-A¹⁻Y¹-A²-OH (2)

wherein each of A¹ and A² is a monocyclic divalent aromatic group and Y¹ is a single bond or a bridging group having one or more atoms that separate A¹ from A². One atom can separate A¹ from A². Specifically, each R¹ can be derived from a dihydroxy aromatic compound of formula (3) 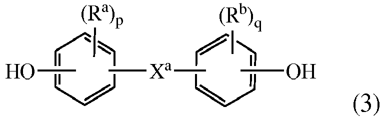 wherein R^{a} and R^{b} are each independently a halogen, C₁₋₁₂ alkoxy, or C₁₋₁₂ alkyl; and p and q are each independently integers of 0 to 4. It will be understood that R^{a} is hydrogen when p is 0, and likewise R^{b} is hydrogen when q is 0. Also in formula (3), X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. The bridging group X^{a} can be single bond, -O-,-S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C6 arylene groups connected thereto are each connected to a common alkylidene carbon or to different carbons of the C₁₋₁₈ organic bridging group. p and q can each be 1, and R^{a} and R^{b} are each a C₁₋₃ alkyl group, specifically methyl, disposed meta to the hydroxy group on each arylene group.

X^{a} can be a substituted or unsubstituted C₃₋₁₈ cycloalkylidene, a C₁₋₂₅ alkylidene of formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{e})- wherein R^{e} is a divalent C₁₋₁₂ hydrocarbon group. Groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

X^{a} can be a C₁₋₁₈ alkylene group, a C₃₋₁₈ cycloalkylene group, a fused C₆₋₁₈ cycloalkylene group, or a group of the formula -B¹-G-B²- wherein B¹ and B² are the same or different C₁₋₆ alkylene group and G is a C₃₋₁₂ cycloalkylidene group or a C₆₋₁₆ arylene group. For example, X^{a} can be a substituted C₃₋₁₈ cycloalkylidene of formula (4) 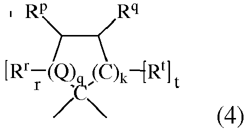 wherein R^{r}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)-where Z is hydrogen, halogen, hydroxy, C₁₋₁₂ alkyl, C₁₋₁₂ alkoxy, or C₁₋₁₂ acyl; r is 0 to 2, t is 1 or 2, q is 0 or 1, and k is 0 to 3, with the proviso that at least two of R^{r}, R^{p}, R^{q}, and R¹ taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and i is 0, the ring as shown in formula (4) contains 4 carbon atoms, when k is 2, the ring as shown in formula (4) contains 5 carbon atoms, and when k is 3, the ring contains 6 carbon atoms. Two adjacent groups (e.g., R^{q} and R¹ taken together) can form an aromatic group or R^{q} and R^{t} taken together can form one aromatic group and R^{r} and R^{p} taken together form a second aromatic group. When R^{q} and R¹ taken together form an aromatic group, R^{p} can be a double-bonded oxygen atom, i.e., a ketone.

Bisphenols (4) can be used in the manufacture of polycarbonates containing phthalimidine carbonate units of formula (4a) 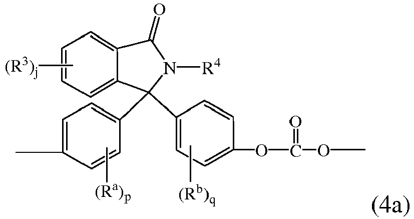 wherein R^{a}, R^{b}, p, and q are as in formula (4), R³ is each independently a C₁₋₆ alkyl group, j is 0 to 4, and R₄ is a C₁₋₆alkyl, phenyl, or phenyl substituted with up to five C₁₋₆ alkyl groups. The phthalimidine carbonate units can be of formula (4b) 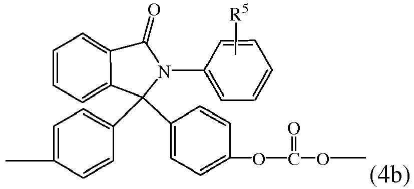 wherein R⁵ is hydrogen or a C₁₋₆ alkyl. R⁵ can be hydrogen. Carbonate units (4a) wherein R⁵ is hydrogen can be derived from 2-phenyl-3,3'-bis(4-hydroxy phenyl)phthalimidine (also known as N-phenyl phenolphthalein bisphenol, or "PPPBP") (also known as 3,3-bis(4-hydroxyphenyl)-2-phenylisoindolin-1-one).

Other bisphenol carbonate repeating units of this type are the isatin carbonate units of formula (4c) and (4d) 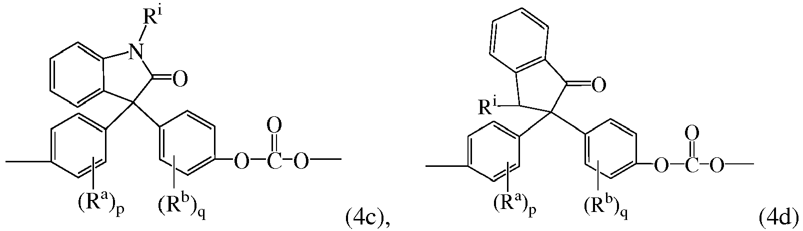 wherein R^{a} and R^{b} are each independently C₁₋₁₂ alkyl, p and q are each independently 0 to 4, and Rⁱ is C₁₋₁₂ alkyl, phenyl, optionally substituted with 1 5 to C₁₋₁₀ alkyl, or benzyl optionally substituted with 1 to 5 C₁₋₁₀ alkyl. R^{a} and R^{b} can each be methyl, p and q can each independently be 0 or 1, and Rⁱ can be C₁₋₄ alkyl or phenyl.

Examples of bisphenol carbonate units derived from bisphenols (4) wherein X^{b} is a substituted or unsubstituted C₃₋₁₈ cycloalkylidene include the cyclohexylidene-bridged, alkyl-substituted bisphenol of formula (4e) 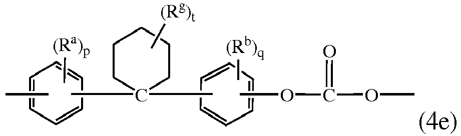 wherein R^{a} and R^{b} are each independently C₁₋₁₂ alkyl, R^{g} is C₁₋₁₂ alkyl, p and q are each independently 0 to 4, and t is 0 to 10. At least one of each of R^{a} and R^{b} can be disposed meta to the cyclohexylidene bridging group. R^{a} and R^{b} can each independently be C₁₋₄ alkyl, R^{g} can be C₁₋₄ alkyl, p and q can each be 0 or 1, and t is 0 to 5. R^{a}, R^{b}, and R^{g} can be each methyl, r and s can be each 0 or 1, and t can be 0 or 3, specifically 0.

Examples of other bisphenol carbonate units derived from bisphenol (4) wherein X^{b} is a substituted or unsubstituted C₃₋₁₈ cycloalkylidene include adamantyl units (4f) and units (4g) 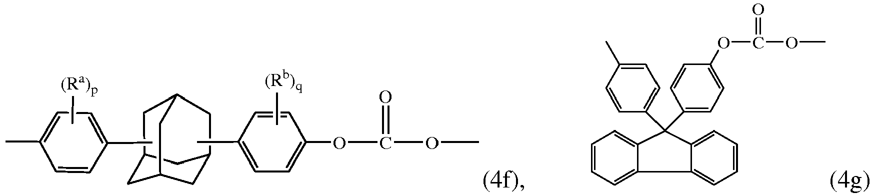 wherein R^{a} and R^{b} are each independently C₁₋₁₂ alkyl, and p and q are each independently 1 to 4. At least one of each of R^{a} and R^{b} can be disposed meta to the cycloalkylidene bridging group. R^{a} and R^{b} can each independently be C₁₋₃ alkyl, and p and q can be each 0 or 1. R^{a}, R^{b} can be each methyl, p and q can each be 0 or 1. Carbonates containing units (4a) to (4g) are useful for making polycarbonates with high glass transition temperatures (Tg) and high heat distortion temperatures.

Other possible aromatic dihydroxy compounds of the formula HO-R¹-OH include compounds of formula (5) 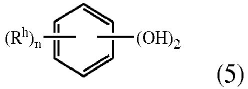 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen can be bromine.

Some illustrative examples of specific aromatic dihydroxy compounds (herein also referred to as dihydroxy reactants) include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl) sulfide, bis(4-hydroxyphenyl) sulfoxide, bis(4-hydroxyphenyl) sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. The polycarbonate can be a linear homopolymer derived from bisphenol A, in which each of A¹ and A² can be p-phenylene, and Y¹ can be isopropylidene in formula (3).

The molar ratio of the carbonate reaction component to the dihydroxy reaction component can be greater than 1 or less than 1. The molar ratio of the carbonate reaction component to the dihydroxy reaction component can be less than 1 when expressed to at least three decimal places, for example 0.996 or less, specifically 0.962 to 0.996, more specifically 0.968 to 0.996, even more specifically 0.971 and 0.994.

The polycarbonate can have one or more of low levels of terminal ester-substituted carbonate end groups, for example less than 0.5 mole (mol) %, a non-salicylate OH to carbonate end group ratio of at least 0.1, and low levels of Fries rearrangement products, for example less than 1000 parts per million by weight (ppm), specifically less than 500 ppm, more specifically less than 200 ppm, even more specifically less than 100 ppm. Further, the resulting polycarbonates can contain low levels of residual free salicylates, for example less than 500 ppm, specifically 1 to 500 ppm, more specifically 1 to 100 ppm.

As used herein the term "Fries product" or "Fries rearrangement product" is defined as a structural unit of the product polycarbonate which upon hydrolysis of the product polycarbonate affords a carboxy-substituted dihydroxy aromatic compound bearing a carboxy group adjacent to one or both of the hydroxy groups of the carboxy-substituted dihydroxy aromatic compound. For example, in bisphenol A polycarbonate prepared by a melt reaction method in which Fries reaction occurs, the Fries product includes those structural features of the polycarbonate which afford 2-carboxy bisphenol A species upon complete hydrolysis of the product polycarbonate.

One method of characterizing Fries rearrangement products is by means of proton NMR. The Fries structures characterized in such an analysis include linear Fries, formula (6a): 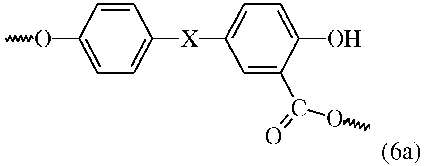 acid Fries, formula (6b) 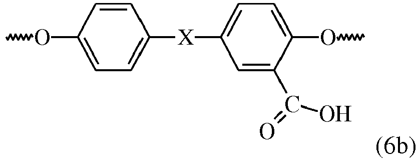 and branched Fries, formula (6c) 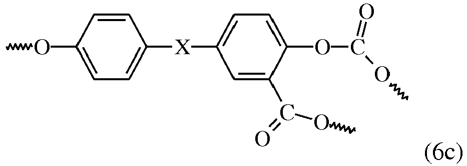 wherein X represents, for example, one of the groups of formula: 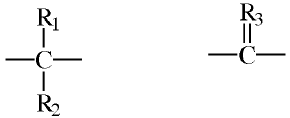 wherein R₁ and R₂ each independently represent a hydrogen atom or a monovalent linear or cyclic hydrocarbon group and R₃ is a divalent hydrocarbon group. The polycarbonate can contain less than 0.25 mol % of terminal ester-substituted carbonate end groups, for example less than 0.2 mol%, or less than 0.1 mol%. As described above, the amount of terminal ester-substituted carbonate end groups can be maintained at these levels by using a stoichiometric ratio of less than 1.

"Polycarbonates" includes homopolycarbonates (wherein each R¹ in the polymer is the same), copolymers comprising different R¹ moieties in the carbonate ("copolycarbonates"), copolymers comprising carbonate units and other types of polymer units, such as ester units, and combinations comprising at least one of homopolycarbonates and/or copolycarbonates.

A specific type of copolymer is a polyester carbonate, also known as a polyester-polycarbonate. Such copolymers further contain, in addition to recurring carbonate chain units of formula (1), repeating units of formula (7) 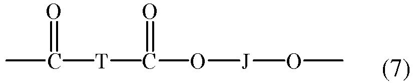 wherein J is a divalent group derived from a dihydroxy compound, and can be, for example, a C₂₋₁₀ alkylene, a C₆₋₂₀ cycloalkylene a C₆₋₂₀ arylene, or a polyoxyalkylene group in which the alkylene groups contain 2 to 6 carbon atoms, specifically 2, 3, or 4 carbon atoms; and T is a divalent group derived from a dicarboxylic acid, and can be, for example, a C₂₋₁₀ alkylene, a C₆₋₂₀ cycloalkylene, or a C₆₋₂₀ arylene. Copolyesters containing a combination of different T and/or J groups can be used. The polyesters can be branched or linear.

J can be a C₂₋₃₀ alkylene group having a straight chain, branched chain, or cyclic (including polycyclic) structure. J can be derived from an aromatic dihydroxy compound of formula (3) above. J can be derived from an aromatic dihydroxy compound of formula (4) above. J can be derived from an aromatic dihydroxy compound of formula (5) above.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98. J can be a C₂₋₆ alkylene group and T can be p-phenylene, m-phenylene, naphthalene, a divalent cycloaliphatic group, or a combination thereof. This class of polyester includes the poly(alkylene terephthalates).

The molar ratio of ester units to carbonate units in the copolymers can vary broadly, for example 1:99 to 99:1, specifically 10:90 to 90:10, more specifically 25:75 to 75:25, depending on the desired properties of the final composition.

The polyester unit of a polyester-polycarbonate can be derived from the reaction of a combination of isophthalic and terephthalic diacids (or derivatives thereof) with resorcinol. The polyester unit of a polyester-polycarbonate can be derived from the reaction of a combination of isophthalic acid and terephthalic acid with bisphenol A. The polycarbonate units can be derived from bisphenol A. The polycarbonate units can be derived from resorcinol and bisphenol A in a molar ratio of resorcinol carbonate units to bisphenol A carbonate units of 1:99 to 99:1.

The polycarbonate composition can comprise another polymer(s), for example another, different, polycarbonate, a polyester, a polysiloxane, additives (e.g., an impact modifier(s), stabilizer(s), colorant(s), flame retardant(s), etc.), or one or more of the foregoing to form a polycarbonate blend.

The polycarbonate composition can have an intrinsic viscosity, as determined in chloroform at 25 °C, of 0.3 to 1.5 deciliters per gram (dl/g), specifically 0.45 to 1.0 dl/gm.

The polycarbonate can have a weight average molecular weight of 10,000 to 200,000 grams per mole (g/mol), specifically 20,000 to 100,000 g/mol as measured by gel permeation chromatography using a crosslinked styrene-divinylbenzene column and calibrated to polycarbonate references. The polycarbonate composition can have a polydispersity index (PDI) of 1.7 to 2.6 and the polydispersity index can be determined by gel permeation chromatography.

The polycarbonate composition can have excellent physical properties, including a melt volume ratio (MVR) of 2.5 to 80 centimeters cubed (cm³)/10 minutes, more specifically 10 to 70 cm³/10 minutes, even more specifically 20 to 50 cm³/10 minutes, measured at 300 degrees Celsius (°C) under a load of 1.2 kilograms (kg) in accordance with ASTM D 1238-04.

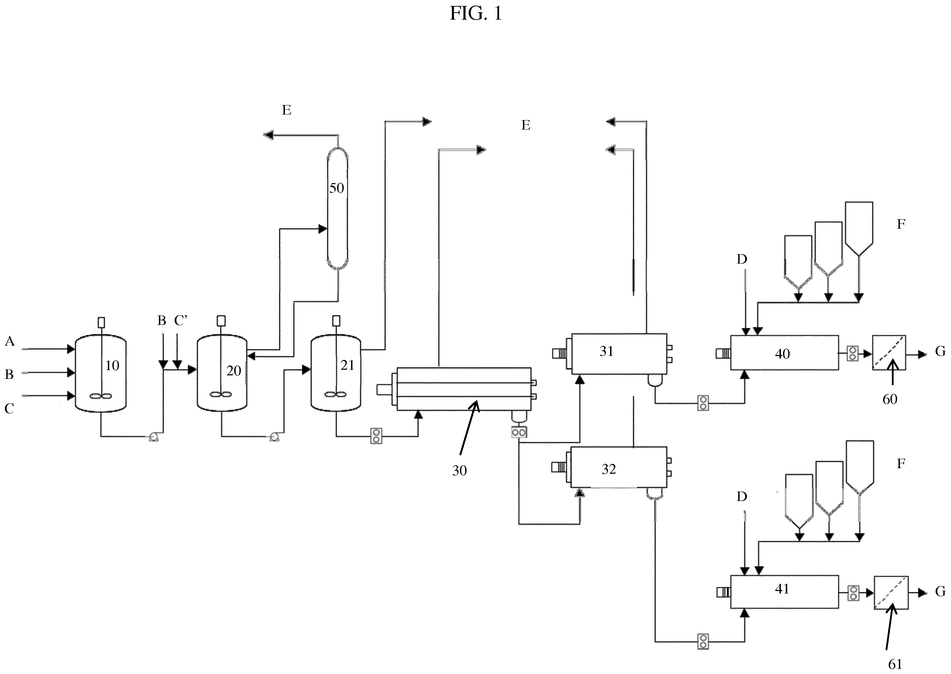

The present process produces polycarbonate compositions having good yellowness index, light transmission, and impact performance as compared to polycarbonate produced in the process of FIG. 1. The polycarbonate composition can further comprise an additive. The additive can include various additives, with the proviso that the additive(s) are selected so as to not significantly adversely affect a desired property of the thermoplastic composition. The additive can be mixed at a suitable time during the mixing of the components for forming the composition. The additive can be soluble and/or non-soluble in polycarbonate. The additive can include impact modifiers, flow modifiers, fillers (such as TEFLON*, glass, carbon, minerals, metals), reinforcing agents, antioxidants, heat stabilizers, light stabilizers, ultraviolet (UV) light stabilizers, UV absorbing additives, plasticizers, lubricants, release agents (such as mold release agents), antistatic agents, anti-fog agents, antimicrobial agents, colorants, surface effect additives, radiation stabilizers, flame retardants, anti-drip agents (such as TSAN), or combinations comprising one or more of the foregoing. The total amount of additives (other than any impact modifier, filler, or reinforcing agents) can be 0.01 to 5 percent by weight (wt%), based on the total weight of the composition.

The impact modifier can include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR) silicone elastomers, and elastomer-modified graft copolymers such as styrene-butadiene-styrene (SBS), styrene-butadiene rubber (SBR), styrene-ethylene-butadiene-styrene (SEBS), acrylonitrile-butadiene-styrene (ABS), acrylonitrile-ethylene-propylene-diene-styrene (AES), styrene-isoprene-styrene (SIS), methyl methacrylate-butadiene-styrene (MBS), high rubber graft (HRG), or a combination comprising one or more of the foregoing. The thermoplastic composition can be essentially free of chlorine and bromine. Essentially free of chlorine and bromine refers to materials produced without the intentional addition of chlorine or bromine or chlorine or bromine containing materials. It is understood however that in facilities that process multiple products a certain amount of cross contamination can occur resulting in bromine and/or chlorine levels typically on the parts per million by weight scale. With this understanding it can be readily appreciated that essentially free of bromine and chlorine can be defined as having a bromine and/or chlorine content of less than or equal to 100 ppm, less than or equal to 75 ppm, or less than or equal to 50 ppm. When this definition is applied to the fire retardant, it is based on the total weight of the fire retardant. When this definition is applied to the thermoplastic composition, it is based on the total weight of the composition, excluding any filler.

A colorant such as pigment and/or dye additives can be present. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C_{2- 8}) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes.

The composition can comprise at least one flame retardant, generally a halogenated material, an organic phosphate, or a combination of the two. The organic phosphate is preferably an aromatic phosphate compound of the formula (III) 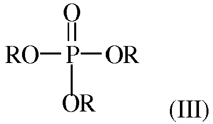 where R is the same or different and is alkyl, cycloalkyl, aryl, alkyl substituted aryl, halogen substituted aryl, aryl substituted alkyl, halogen, or a combination of any of the foregoing, provided at least one R is aryl.

Examples include phenyl bisdodecyl phosphate, phenylbisneopentyl phosphate, phenyl-bis (3,5,5'-tri-methyl-hexyl phosphate), ethyldiphenyl phosphate, 2-ethyl-hexyldi(p-tolyl) phosphate, bis-(2-ethylhexyl) p-tolylphosphate, tritolyl phosphate, bis-(2-ethylhexyl) phenyl phosphate, tri-(nonylphenyl) phosphate, di (dodecyl) p-tolyl phosphate, tricresyl phosphate, triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, and the like. The phosphates can be one in which each R is aryl or alkyl substituted aryl.

Alternatively, the organic phosphate can be a di- or polyfunctional compound or polymer having the formula (IV), (V), or (VI) below 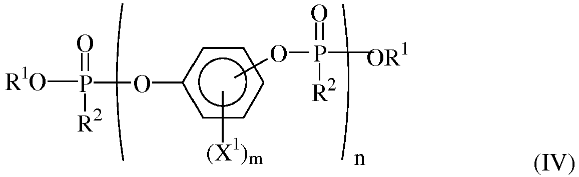 or 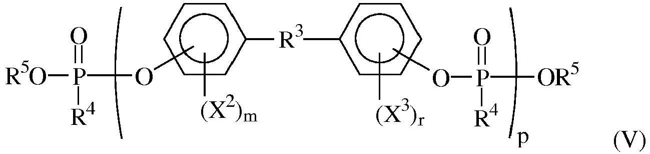 or 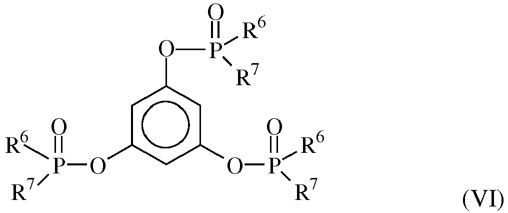 including mixtures thereof, in which R¹, R³ and R⁵ are, independently, hydrocarbon; R², R⁴, R⁶ and R⁷ are, independently, hydrocarbon or hydrocarbonoxy; X¹ , X² and X³ are halogen; m and r are 0 or integers from 1 to 4, and n and p are from 1 to 30.

Examples include the bis diphenyl phosphates of resorcinol, hydroquinone and bisphenol-A, respectively, or their polymeric counterparts.

Methods for the preparation of the aforementioned di- and polyfunctional aromatic phosphates are described in British Patent No. 2,043,083.

Another group of possible flame retardants include certain cyclic phosphates, for example, diphenyl pentaerythritol diphosphate, as a flame retardant agent for poly(arylene ether) resins, as is described by Axelrod in U.S. Patent No. 4,154,775.

Particularly useful organic phosphates include phosphates containing substituted phenyl groups, phosphates based upon resorcinol such as, for example, resorcinol tetraphenyl diphosphate, as well as those based upon bis-phenols such as, for example, bis-phenol A tetraphenyl diphosphate. The organic phosphate can be selected from the group consisting of butylated triphenyl phosphate, resorcinol diphosphate, bis-phenol A diphosphate, triphenyl phosphate, isopropylated triphenyl phosphate and mixtures of two or more of the foregoing.

The flame retardant can comprise phosphoramides of the formula (VII) 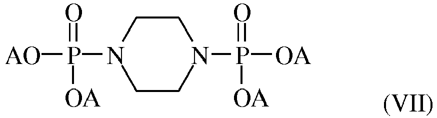 wherein each A moiety is a 2,6-dimethylphenyl moiety or a 2,4,6-trimethylphenyl moiety. These phosphoramides are piperazine-type phosphoramides. These additives are known in the art and have been described in Talley, J. Chem. Eng. Data, 33, 221-222 (1988). When polyamide resins are used as part of the composition, these piperazine-type phosphoramides are especially useful, as they are believed to have fewer interactions with the polyamides then the organo-ester type phosphates.

Halogenated materials are also a useful class of flame retardants. These materials are preferably aromatic halogen compounds and resins of the formula (VIII) 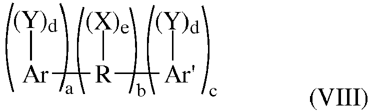 wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, etc.; a linkage selected from the group consisting of either oxygen ether; carbonyl; amine; a sulfur containing linkage, e.g., sulfide, sulfoxide, sulfone; a phosphorus containing linkage; etc. R can also consist of two or more alkylene or alkylidene linkages connected by such groups as aromatic, amino, ether, carbonyl, sulfide, sulfoxide, sulfone, a phosphorus containing linkage, etc. Other groups which are represented by R will occur to those skilled in the art, including those found in U.S. Patent Nos. 4,692,490 and 4,191,685.

Ar and Ar' are mono- or polycarbocyclic aromatic groups such as phenylene, biphenylene, terphenylene, naphthylene, etc. Ar and Ar' can be the same or different.

Y is a substituent selected from the group consisting of organic, inorganic or organometallic radicals. The substituents represented by Y include (1) halogen, e.g., chlorine, bromine, iodine, fluorine or (2) ether groups of the general formula OE, wherein E is a monovalent hydrocarbon radical similar to X or (3) monovalent hydrocarbon groups of the type represented by R or (4) other substituents, e.g., nitro, cyano, etc., the substituents being essentially inert provided there be at least one and preferably two halogen atoms per aryl nucleus.

X is a monovalent hydrocarbon group exemplified by the following: alkyl, such as methyl, ethyl, propyl, isopropyl, butyl, decyl, etc.; aryl groups, such as phenyl, naphthyl, biphenyl, xylyl, tolyl, etc.; aralkyl groups such as benzyl, ethylphenyl, etc.; cycloaliphatic groups, such as cyclopentyl, cyclohexyl, etc.; as well as monovalent hydrocarbon groups containing inert substituents therein. It will be understood that where more than one X is used they can be alike or different.

The letter d represents a whole number ranging from 1 to a maximum equivalent to the number of replaceable hydrogens substituted on the aromatic rings comprising Ar or Ar'. The letter e represents a whole number ranging from 0 to a maximum controlled by the number of replaceable hydrogens on R. The letters a, b, and c represent whole numbers including 0. When b is not 0, neither a nor c can be 0. Otherwise either a or c, but not both, can be 0. Where b is 0, the aromatic groups are joined by a direct carbon-carbon bond.

The hydroxyl and Y substituents on the aromatic groups, Ar and Ar' can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dichromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; 2,2-bis-(3,5-dichloro-4-hydroxyphenyl)-propane 2,2 bis-(3-bromo-4-hydroxyphenyl)-propane.

These and other applicable bisphenols can be prepared, for example, by condensation of two moles of a phenol with a single mole of a ketone or aldehyde. In place of the divalent aliphatic group in the above examples can be substituted oxygen, sulfur, sulfoxy, etc.

Included within the above structural formula are: 1,3-dichlorobenzene, 1,4-dibrombenzene, 1,3-dichloro-4-hydroxybenzene and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as, for example, a copolycarbonate of bisphenol A and tetrabromobisphenol A and a carbonate precursor, e.g., phosgene. Metal synergists, e.g., antimony oxide, can also be used with the flame retardant.

The flame retardant can comprise a perfluoroalkyl sulfonate salt or a combination of an aromatic phosphate ester and a polycarbonate-polysiloxane copolymer.

Perfluoroalkyl sulfonate salts include salts of C₂₋₁₆ alkyl sulfonate salts such as potassium perfluorobutane sulfonate (Rimar salt), potassium perfluoroctane sulfonate, and tetraethylammonium perfluorohexane sulfonate. The perfluoroalkyl sulfonate salt can be present in an amount of 0.30 to 1.00 wt%, specifically 0.40 to 0.80 wt%, specifically 0.45 to 0.70 wt%, based on the total weight of the composition.

The flame retardant can comprise an aromatic sulphone sulfonate (such as potassium 3-(phenylsulfonyl)benzenesulfonate) (KSS)), an aromatic sulfonate (such as sodium toluene sulphonic acid (NaTS), or a combination comprising one or both of the foregoing.

The aromatic sulphone sulphonate can comprise a formula (K-1) compound 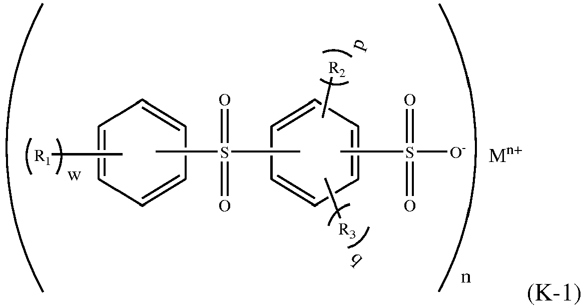 wherein R₁, R₂, and R₃ are independently selected from a C₁-C₆ alkyl group such as methyl and ethyl; M is a metal (e.g., alkali metal such as sodium, potassium, and so forth); n is an integer and 1≤n≤3; w is an integer and 0≤w≤5; p and q are integers, p≥0, q≥0, and p+q≤4.

Exemplary amounts of aromatic sulphone sulphonate present in the thermoplastic composition can be 0.01 to 0.6 wt%, specifically 0.1 to 0.4 wt%, and more specifically 0.25 to 0.35 wt%, based on the total weight of the thermoplastic composition.

The aromatic sulphonate in the thermoplastic composition can be an alkali metal salt. For example the can comprises a formula (N-1) compound: 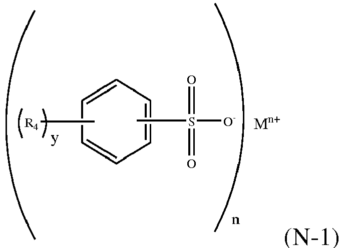 wherein R₄ is a C₁-C₆ alkyl group such as methyl and ethyl; M is a metal (e.g., alkali metal such as sodium, potassium, and so forth); n is an integer and 1≤n≤3; y is an integer and 0≤y≤5. The aromatic sulphonate can be present in the final thermoplastic composition in an amount of 0.01 to 0.1 wt%, specifically 0.02 to 0.06 wt%, and more specifically 0.03 to 0.05 wt%.

A filler can be present. Examples of fillers include those described in "Plastic Additives Handbook, 5th Edition" Hans Zweifel, Ed, Carl Hanser Verlag Publishers, Munich, 2001. Non-limiting examples of fillers include silica powder, such as fused silica and crystalline silica; boron-nitride powder and boron-silicate powders for obtaining cured products having low dielectric constant and low dielectric loss tangent; alumina, and magnesium oxide (or magnesia) for high temperature conductivity; and fillers, such as wollastonite including surface-treated wollastonite, calcium sulfate (as its anhydride, dihydrate or trihydrate), calcium carbonate including chalk, limestone, marble and synthetic, precipitated calcium carbonates, generally in the form of a ground particulates; talc, including fibrous, modular, needle shaped, and lamellar talc; glass spheres, both hollow and solid; kaolin, including hard, soft, calcined kaolin, and kaolin comprising various coatings known in the art to facilitate compatibility with the polymeric matrix resin; mica, feldspar, silicate spheres, flue dust, cenospheres, fillite, aluminosilicate (armospheres), natural silica sand, quartz, quartzite, perlite, tripoli, diatomaceous earth, synthetic silica, and the like. All of the above fillers can be coated with a layer of metallic material to facilitate conductivity or surface treated with silanes to improve adhesion and dispersion with the polymeric matrix resin.

Other mineral fillers include silicon carbide to increase the abrasive action of polymers; molybdenum sulfide to improve the lubricity, zinc sulfide to impart a white coloration; aluminum silicate (mullite), synthetic calcium silicate and zirconium silicate to improve slip properties; barium titanate to enhance dielectric properties; barium ferrite to produce magnetized polymers; and barium sulfate and heavy spar. Other fillers include metals and metal oxides including particulate or fibrous aluminum, bronze, zinc, copper and nickel to improve, for example, thermal, electrical conductivity or resistance to neutron or gamma rays. Flaked fillers that offer reinforcement such as glass flakes, flaked silicon carbide, aluminum diboride, aluminum flakes, and steel flakes can also be added to the masterbatch for dispersion into the polymeric matrix resin.

Fibrous fillers include short inorganic fibers such as those derived from blends comprising at least one of aluminum silicates, aluminum oxides, magnesium oxides, and calcium sulfate hemihydrate can also be added into the masterbatch. Other fibrous fillers include natural fillers and reinforcements, such as wood flour obtained by pulverizing wood, and fibrous products such as cellulose, cotton, sisal, jute, starch, cork flour, lignin, ground nut shells, corn, rice grain husks. Also included among fibrous fillers are single crystal fibers or "whiskers" including silicon carbide, alumina, boron carbide, iron, nickel, copper. Glass fibers, including textile glass fibers such as E, A, C, ECR, R, S, D, and NE glasses and quartz, and the like can also be added into the masterbatch.

In addition, organic reinforcing fibrous fillers can also be used in the present invention including, organic polymers capable of forming fibers. Illustrative examples of such organic fibrous fillers include, for example, poly(ether ketone), polyimide, polybenzoxazole, poly(phenylene sulfide), polyesters, polyethylene, aromatic polyamides, aromatic polyimides or polyetherimides, polytetrafluoroethylene, acrylic resins, and poly(vinyl alcohol). Such reinforcing fillers can be provided in the form of monofilament or multifilament fibers and can be used either alone or in combination with other types of fiber, through, for example, co-weaving or core/sheath, side-by-side, orange-type or matrix and fibril constructions, or by other methods known to one skilled in the art of fiber manufacture. Typical co-woven structures include glass fiber-carbon fiber, carbon fiber-aromatic polyimide (aramid) fiber, and aromatic polyimide fiberglass fiber. Fibrous fillers can be supplied in the form of, for example, rovings, woven fibrous reinforcements, such as 0-90 degree fabrics, non-woven fibrous reinforcements such as continuous strand mat, chopped strand mat, tissues, papers and felts and 3-dimensionally woven reinforcements, performs and braids.

Due to the process disclosed herein, polycarbonate formed by melt polymerization can be initially produced (e.g., exiting the first extruder), comprising additives and fillers that were not previously possible at that point in a melt polymerization process. Some of these fillers and additives include mineral fillers, glass, metal, KSS, TSAN, and others, e.g., any filler or additive having a major diameter of greater than or equal to the mesh size of the filter, as well as combinations comprising at least one of the foregoing.

The polycarbonate is made by a melt polymerization process, which can be a continuous melt process. Generally, in a melt polymerization process, polycarbonates can be prepared by co-reacting, in a molten state, monomers such as a dihydroxy reactant and a compound comprising a carbonate group (herein also referred to as a carbonate compound), such as phosgene. The carbonate compound can comprise a diaryl carbonate ester such as diphenyl carbonate. A useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing esters. The diaryl carbonate ester to dihydroxy reactant can be present in a molar ratio of 2:1 to 1:2, specifically in a molar ratio of 1.5:1 to 1:1.5, more specifically in a molar ratio of 1.05:1 to 1:1.05, even more specifically in a molar ratio of 1:1. The dihydroxy reactant and/or the carbonate compound can be added to the polymerization unit as a solvent mixture, such as a mixture with acetone.

The polymerization can occur in a polymerization vessel or in a series of polymerization vessels that can have increasing temperature and vacuum. The initial polymerization vessels can be oligomerization units.

A transesterification catalyst(s) can be employed in the polymerization. Such catalysts include phase transfer catalysts of formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. The catalyst can comprise a potassium sodium phosphate of the formula NaKHPO₄.

A branching agent can be employed in the polymerization and can result in an increase in polymer melt strength. The branching agent (1,1,1-tris-(hydroxyphenyl) ethane (THPE)) as can be introduced to the polymerization unit, specifically to a polymerization and/or an oligomerization vessel, as a solution of the branching agent dissolved in a branching solvent. The branching solvent selected for dissolving the branching agent can be any solvent capable of dissolving the branching agent at a level sufficient to deliver or introduce the desired amount of branching agent into the polymerization unit. The branching solvent can comprise include lower alkanols, such as C₁₋₄ alkanols, including methanol, ethanol, propanol (such as n-propanol and isopropanol), n-butanol, or a combination comprising one or more of the foregoing.

The branching agent can be introduced in an amount such that it will result in a polycarbonate comprising up to 1.5 mol %, specifically up to 1.0 mol %, more specifically up to 0.5 mol % branching agent in the final branched polycarbonate. The amount of dissolved branching agent present in the solution can be an amount of 0.5 to 50 wt%, specifically 5 to 40 wt%, more specifically 15 to 35 wt% relative to the total weight of the branching agent and solvent solution. The polymerized polycarbonate can comprise a branching agent in the amount of 100 to 5,000 ppm, specifically 500 to 4,000 ppm, more specifically 1,000 to 3,500 ppm based on the total amount of polycarbonate repeat units.

A chainstopper can be introduced to the polymerization unit. The chainstopper can be a monofunctional phenol.

In general, melt polymerization of polycarbonate utilizes a polymerization unit that can comprise a mixer(s), a buffer vessel(s), an oligomerization vessel(s), a polymerization vessel(s), an extruder(s), a scrubber(s), a filter(s), or combinations comprising one or more of the foregoing. The melt polymerization unit can comprise a polymerization vessel, a melt filter, and an extruder, wherein the melt filter is located upstream from the extruder. The melt polymerization unit can comprise a first and a second parallel line, wherein the first parallel line is connected to the melt filter located upstream from the extruder, and wherein the second parallel line is connected to a second melt filter that is located upstream from a second extruder.

FIG. 1 illustrates a melt polycarbonate polymerization system. Initially, dihydroxy reactant (A) and carbonate compound (B) are added at a fixed molar ratio along with catalyst (C) to a pre-mixer (10) to form a pre-mixture. The pre-mixer can be maintained at 160 to 180 °C and atmospheric pressure. The pre-mixture and any additional carbonate compound (B) and catalyst (C'), where the additional carbonate compound (B) and/or catalyst (C') are the same or different as that added to the pre-mixer, is sent to a first oligomerization vessel (20). The first oligomerization vessel can operate at a temperature of 230 to 260 °C and a vacuum of 140 to 200 millibar atmosphere (mbara) and phenol byproduct from polymerization reaction is removed. The mixture then flows into a second oligomerization vessel (21) that can operate at a higher temperature of 270 to 290 °C and a deeper vacuum of 30 to 50 mbara, e.g., for further phenol removal. The prepolymer, as formed in the oligomerization vessel, then flows to a first polymerization vessel (30) that can operate at a temperature of 290 to 315 °C and 1 to 2.5 mbara. The effluent from the first polymerization vessel is then optionally split into two parallel second polymerization vessels (31, 32) that can operate at 290 to 315 °C and 0.5 to 1.5 mbara to result in the formation of a molten polycarbonate. Phenol by-product (E) and any solvent can be removed, for example by a scrubber (50), from the oligomerization vessel (20, 21) and/or from the polymerization vessel (30, 31, 32).

The polycarbonate then flows to an extruder (40, 41) where quencher (D), to deactivate polymerization catalyst, and an additive (F) are added to the molten polycarbonate. The extruder (40, 41) can be a twin-screw extruder and at least one of the components can be incorporated into the composition by feeding directly into the extruder (40, 41) at the throat and/or downstream through for example, a sidestuffer. Additives can also be compounded into a masterbatch with a desired polymeric resin and fed into the extruder. The extruder (40, 41) can be operated at a temperature higher than allows the composition to flow. After the extruder (40, 41), the resulting product is pumped through a melt filter (60, 61) that can be a stainless steel filter and that have a 2.5 to 50 micrometer, specifically a 10 to 40 micrometer, more specifically a 15 to 30 micrometer mesh size [Please confirm], e.g., to remove gels and other impurities from the polymerization product. The product is then stranded in a die-head and finally pelletized and packaged. The pellets, so prepared, when cutting the extrudate can be, for example, one-fourth inch long or less as desired. Such pellets can be used for subsequent molding, shaping, or forming. Typical nominal throughput per line ranges from 3 to 6.6 tons/hour.

Typically, melt polycarbonate (PC) plants only produced clear, transparent products as in-line throughputs are big (2 - 15 tons/hr). At those rates, opaque (e.g., a haze of greater than or equal to 95% as measured in accordance with ASTM D1003-00, Procedure A, illuminant C) or non-natural coloured grades require the production of large amounts of transition materials when changing from one color to another color. Also the melt process inherently produces gels because of the catalyst presence in the melt polycarbonate, thus as long as this catalyst is active and the residence time is enough (e.g., more than 2 minutes), these gels can be formed. For this reason the melt filter as always located at the end of the process after catalyst has been deactivated by using a quencher at or in the extruder, or if a quencher was not used, then the residence time until the polycarbonate was cooled down and pelletized was fairly small (less than 2 minutes).

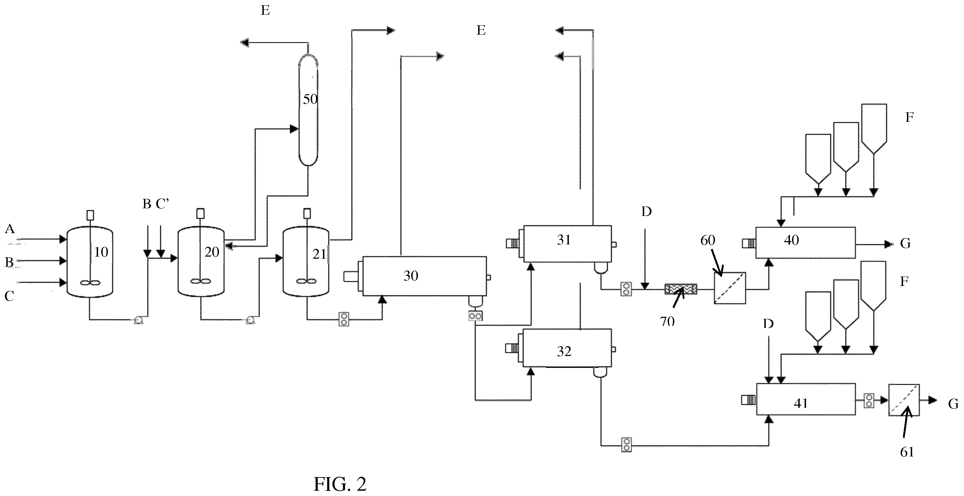

The Applicants surprisingly found that the polymerization unit can be reconfigured such that the melt filter is located prior to at least one extruder. Such a reconfiguration allows for the filtration of the polycarbonate to remove for example, the gels and impurities, prior to extrusion while allowing for the addition of fillers and additives to the polycarbonate in the extruder that would have otherwise been filtered out by the melt filter. This reconfiguration is illustrated in FIG. 2 that shows the polymerization process as described above with regards to FIG. 1, except that the polymerization unit is reconfigured such that the melt filter (60) is located prior to the extruder (40). Here, the polycarbonate stream from the second polymerization vessel (31) can be treated with a quencher (D) before being filtered to deactivate the polymerization catalyst to avoid the creation of gels after being filtered. Quenching can be performed by in-line mixing, through for example a static mixer (70), of a suitable quencher, such as an acidic quencher. The quencher can be mixed with molten polycarbonate for 0.3 to 5 minutes, specifically 0.5 to 3 minutes, and more specifically 1 to 2 minutes, e.g., prior to filtering. Quenching can be performed without mixing. The resultant polycarbonate composition can be opaque.

Additional advantages of this configuration can be one or both of the reduction in the number of pumping equipment since the discharge pump of the second polymerization vessel can be used for pumping the molten polymer through the melt filter (thus saving an expensive melt pump) and the reduction of the residence time downstream the extruder, thus having faster grade changes and generating less transition material.

Shaped, formed, or molded articles comprising the polycarbonate compositions are also provided. The polycarbonate compositions can be molded into useful shaped articles by a variety of means such as injection molding, extrusion, rotational molding, blow molding and thermoforming to form articles such as, for example, computer and business machine housings such as housings for monitors, handheld electronic device housings such as housings for cell phones and digital cameras, fixed electrical enclosures such as exit signs, humidifier housings and HVAC (heat ventilation and air conditioning) housings, electrical connectors, and components of lighting fixtures, ornaments, home appliances, roofs, greenhouses, sun rooms, swimming pool enclosures, and the like. The polycarbonate composition can be used in electronic, electrical, building, and construction applications.

The polycarbonate compositions can be used to form films, specifically a film with low smoke generation, and more specifically a flat film with low smoke generation capability. Such films are useful to lower smoke generation by themselves or in combination with a substrate, which can be used as articles for the transportation and construction industry. Such articles include ceilings, sidewalls, bin doors, partitions, window masks, seats, seat back shrouds, seat-backs, arm-rests, tray-tables, storage bins and luggage racks in automobiles such as trains, buses and aircraft.

The films can be formed by processes such as film and sheet extrusion, injection molding, gas-assist injection molding, extrusion molding, compression molding, blow molding, and combinations comprising at least one of the foregoing processes. Film and sheet extrusion processes can include and are not limited to melt casting, blown film extrusion and calendaring. Co-extrusion and lamination processes can be used to form composition multi-layer films or sheets. Single or multiple layers of coatings can further be applied to the single or multi-layer substrates to impart additional properties such as scratch resistance, ultra violet light resistance, aesthetic appeal, and the like. Coatings can be applied through standard application techniques such as rolling, spraying, dipping, brushing, flow coating, or combinations comprising at least one of the foregoing application techniques. The disclosed film and sheets can alternatively be prepared by casting a solution or suspension of the composition in a suitable solvent onto a substrate, belt or roll followed by removal of the solvent.

Oriented films can be prepared through blown film extrusion or by stretching cast or calendared films in the vicinity of the thermal deformation temperature using standard stretching techniques. For instance, a radial stretching pantograph can be employed for multi-axial simultaneous stretching; an x-y direction stretching pantograph can be used to simultaneously or sequentially stretch in the planar x-y directions. Equipment with sequential uniaxial stretching sections can also be used to achieve uniaxial and biaxial stretching, such as a machine equipped with a section of differential speed rolls for stretching in the machine direction and a tenter frame section for stretching in the transverse direction.

The polycarbonate compositions can also be used to form a multiwall sheet comprising a first sheet having a first side and a second side, wherein the first sheet comprises a thermoplastic polymer, and wherein the first side of the first sheet is disposed upon a first side of a plurality of ribs; and a second sheet having a first side and a second side, wherein the second sheet comprises a thermoplastic polymer, wherein the first side of the second sheet is disposed upon a second side of the plurality of ribs, and where the first side of the plurality of ribs is opposed to the second side of the plurality of ribs. The multiwall sheet is configured to not impede the desired physical properties of the article.

The films and sheets described above are further thermoplastically processed into shaped articles via forming and molding processes including but not limited to thermoforming, vacuum forming, pressure forming, injection molding and compression molding. Multi-layered shaped articles can be formed by injection molding a thermoplastic resin onto a single or multi-layer film or sheet substrate by first providing a single or multi-layer thermoplastic substrate having optionally one or more colors on the surface, for instance, using screen printing or a transfer dye; conforming the substrate to a mold configuration such as by forming and trimming a substrate into a three dimensional shape and fitting the substrate into a mold having a surface which matches the three dimensional shape of the substrate; then injecting a thermoplastic resin into the mold cavity behind the substrate to (i) produce a one-piece permanently bonded three-dimensional product or (ii) transfer a pattern or aesthetic effect from a printed substrate to the injected resin and remove the printed substrate, thus imparting the aesthetic effect to the molded resin.

Those skilled in the art will also appreciate that common curing and surface modification processes including and not limited to heat-setting, texturing, embossing, corona treatment, flame treatment, plasma treatment and vacuum deposition can further be applied to the above articles to alter surface appearances and impart additional functionalities to the articles.

In an embodiment, a melt polymerization process for the manufacture of a polycarbonate composition can comprise (or can consist of), in the following order: melt polymerizing a dihydroxy reactant and a carbonate compound to produce a molten reaction product; quenching the molten reaction product upstream of all extruders; filtering the molten reaction product in a melt filter; introducing an additive to form a mixture; and extruding the mixture to form a polycarbonate composition.

In the various embodiments: (i) the process can further comprise removing gels having a particle size of greater than or equal to 0.5 micrometers from the reaction product prior to any extruding; and/or (ii) the process can further comprise, subsequent to removing the gels and before extruding, introducing an additive having a particle size of greater than or equal to 0.5 micrometers to the molten reaction product; and/or (iii) the gels are removed from the whole stream comprising the molten reaction product; and/or (iv) the melt polymerizing comprises separating a molten reaction product stream into a first parallel stream and a second parallel stream; wherein the first parallel stream is at least one of (a) filtered prior to any extruding and (b) gels having a particle size of greater than or equal to 0.5 micrometers are removed upstream of all extruders; and wherein the second parallel stream is filtered at least one of (a) before any extruding and (b) after extruding; and/or (v) the second parallel stream is filtered after extruding; and/or (vi) a catalyst quencher is added to the reaction product prior to the filtering; and/or (vii) the quencher is mixed with the molten reaction product for 0.3 to 5 minutes prior to the filtering; and/or (viii) the catalyst quencher is an acid quencher; and/or (ix) the process can further comprise mixing in an inline mixer, wherein the mixing occurs after the quenching and before the filtering; and/or (x) the filtering uses a filter with a pore size of 2.5 to 50 micrometers; and/or (xi) the extruding comprises extruding with an additive, and wherein the additive comprises a colorant, a heat stabilizer, an antioxidant, a UV absorbing additive, an antistatic agent, an impact modifier, a flow modifier, a release agent, an anti-fog additive, an antimicrobial agent, a flame retardant, a filler, or a combination comprising one or more of the foregoing; and/or (xii) the extruding comprises extruding with an additive, and wherein the additive has a major diameter of greater than or equal to the pore size of the filter; and/or (xiii) the extruding comprises extruding with an additive, and wherein the additive comprises a mineral filler, glass, metal, KSS, TSAN, or a combination comprising at least one of the foregoing; and/or (xiv) the process can further comprise pelletizing the extruded polycarbonate composition; and/or (xv) the melt polymerizing occurs in the presence of a catalyst; and/or (xvi) the melt polymerizing occurs in a series of polymerization stages; and/or (xvii) the melt polymerizing occurs in a series of polymerization stages and the series of polymerization stages have increasing levels of temperature and vacuum; and/or (xviii) the process can further comprise stranding and pelletizing the polycarbonate composition; and/or (xix) the polycarbonate composition is opaque. In the above processes, (i) there is no further filtration step after the extruding; (ii) if the reaction product stream is split, there is no further filtration step after the extruding in at least one of the split streams; or (iii) there is further filtration after extruding. In the various embodiments, the filtering is upstream of any extruders. In other words, the filter (and hence the filtering) is prior to any extruders, although additional filtering downstream from an extruder is optional.

In an embodiment, a melt polymerization unit can comprise: a polymerization vessel for melt polymerizing a dihydroxy reactant and a carbonate compound to produce a molten reaction product, a melt filter, and an extruder, wherein the melt filter is located upstream from all extruders.

In the various embodiments: (i) the polymerization unit can further comprise a static mixer that is located before the melt filter; and/or (ii) the polymerization unit can further comprise a first and a second parallel line, wherein the first parallel line is connected to the melt filter located upstream from the extruder, and wherein the second parallel line is connected to a second melt filter that is located downstream from a second extruder.

The following examples are provided to illustrate the method of preparing the catalyst. The examples are merely illustrative and are not intended to limit methods made in accordance with the disclosure to the materials, conditions, or process parameters set forth therein.

### Examples

L color values are normalized with respect to initial L values in the resin before adding the carbon black. L color value was measured by dissolving 1 gram of polycarbonate pellets in 15 milliliters (ml) of dichloromethane (e.g., Lichrosolv* commercially available from Merck Millipore, Germany). L, a, and b were reported using a Perkin Elmer Lambda 800 spectrophotometer, derived from measured tristimulus values of the sample in absorbance mode between 380 and 720 nanometers (nm).

### Example 1: Reduction of transition time

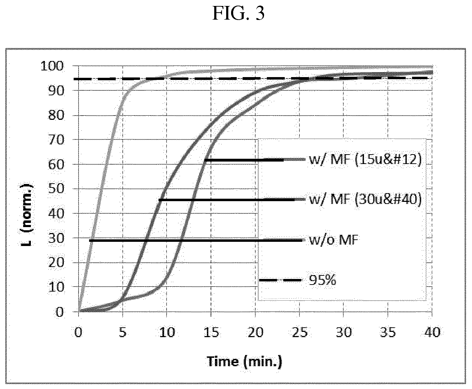

As an example this is the reduction in transition time (time to recover 95% of the original L color value) after removing the addition of 16.2 ppm of carbon black (particle size below 1 micrometer) in the finishing extruder when melt filter (15 micrometers and 12 segments or 30 micrometers and 40 segments, filtering media from Pall) is after the extruder or before the extruder. Polymer throughput of the experiment is 42 kg/hour (h) polymer with a Mw of 45 kg/mol (PS basis). As shown in FIG. 3, there is a difference of about 25 minutes.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements can be combined in any suitable manner in the various embodiments.

## Claims

1. A melt polymerization process for the manufacture of a polycarbonate composition comprising, in the following order:
melt polymerizing a dihydroxy reactant and a carbonate compound to produce a molten reaction product;
quenching the molten reaction product upstream of all extruders;
filtering the molten reaction product in a melt filter;
introducing an additive to form a mixture; and
extruding the mixture to form a polycarbonate composition.

2. The process of Claim 1, further comprising removing polycarbonate gels having a particle size of greater than or equal to 0.5 micrometers from the reaction product prior to any extruding.

3. The process of Claim 2, wherein the polycarbonate gels are removed from the whole stream comprising the molten reaction product.

4. The process of any one of Claims 1-2, wherein the melt polymerizing comprises separating a molten reaction product stream into a first parallel stream and a second parallel stream;
wherein the first parallel stream is at least one of (i) filtered prior to any extruding and (ii) polycarbonate gels having a particle size of greater than or equal to 0.5 micrometers are removed upstream of all extruders; and
wherein the second parallel stream is filtered at least one of (i) before any extruding and (ii) after extruding.

5. The process of Claim 4, wherein the second parallel stream is filtered after extruding.

6. The process of any of Claims 1-5, wherein there is no further filtration step after the extruding.

7. The process of any of Claims 1-6, wherein a catalyst quencher is added to the reaction product prior to the filtering.

8. The process of Claim 7, wherein the quencher is mixed with the molten reaction product for 0.3 to 5 minutes prior to the filtering.

9. The process any of Claims 7-8, wherein the catalyst quencher is an acid quencher.

10. The process of any of Claims 7-9, further comprising mixing in an inline mixer, wherein the mixing occurs after the quenching and before the filtering.

11. The process of any of Claims 1-10, wherein the filtering uses a filter with a pore size of 2.5 to 50 micrometers.

12. The process of any of Claims 1-11, wherein the extruding comprises extruding with an additive, and wherein the additive comprises a colorant, a heat stabilizer, an antioxidant, a UV absorbing additive, an antistatic agent, an impact modifier, a flow modifier, a release agent, an anti-fog additive, an antimicrobial agent, a flame retardant, a filler, or a combination comprising one or more of the foregoing.

13. The process of any of Claims 1-12, wherein the extruding comprises extruding with an additive, and wherein the additive has a major diameter of greater than or equal to the pore size of the filter.

14. The process of any of Claims 1-13, wherein the extruding comprises extruding with an additive, and wherein the additive comprises a mineral filler, glass, metal, KSS, TSAN, or a combination comprising at least one of the foregoing.

15. The process of any of Claims 1-14, further comprising pelletizing the extruded polycarbonate composition.

16. The process of any of Claims 1-15, wherein the melt polymerizing occurs in the presence of a catalyst.

17. The process of any of Claims 1-16, wherein the melt polymerizing occurs in a series of polymerization stages.

18. The process of Claim 17, wherein the series of polymerization stages have increasing levels of temperature and vacuum.

19. The process of any of Claims 1-18, further comprising stranding and pelletizing the polycarbonate composition.

20. The process of any of Claims 1-19, wherein the polycarbonate composition is opaque.

## Patentansprüche

1. Ein Schmelzpolymerisationsverfahren zur Herstellung einer Polycarbonat-Zusammensetzung umfassend, in der folgenden Reihenfolge:
Schmelzpolymerisieren des Dihidroxy-Reagenz und einer Carbonatverbindung, um ein geschmolzenes Reaktionsprodukt zu produzieren;
Quenchen des geschmolzenen Reaktionsprodukts stromaufwärts vor allen Extrudern;
Filtern des geschmolzenen Reaktionsprodukts in einem Schmelzfilter;
Einführen eines Additives, um eine Mischung zu bilden; und
Extrudieren der Mischung, um eine Polycarbonat-Zusammensetzung zu bilden.

2. Das Verfahren gemäß Anspruch 1, ferner umfassend das Entfernen von Polycarbonatgelen mit einer Partikelgröße von größer als oder gleich 0,5 Mikrometern aus dem Reaktionsprodukt vor jedem Extrudieren.

3. Das Verfahren gemäß Anspruch 2, wobei die Polycarbonatgele aus dem gesamten Strom entfernt werden, der das geschmolzene Reaktionsprodukt umfasst.

4. Das Verfahren gemäß irgendeinem der Ansprüche 1-2, wobei die Schmelzpolymerisation das Trennen eines geschmolzenen Reaktionsproduktstroms in einen ersten parallelen Strom und einen zweiten parallelen Strom umfasst; wobei der erste parallele Strom mindestens eines von (i) filtern vor jedem Extrudieren und (ii) Polycarbonatgele mit einer Partikelgröße von größer als oder gleich 0,5 Mikrometern vor allen Extrudern entfernt werden, ist; und wobei der zweite parallele Strom mindestens eines von (i) vor jedem Extrudieren und (ii) nach dem Extrudieren gefiltert wird.

5. Das Verfahren gemäß Anspruch 4, wobei der zweite parallele Strom nach dem Extrudieren gefiltert wird.

6. Das Verfahren gemäß irgendeinem der Ansprüche 1-5, wobei es keinen weiteren Filtrationsschritt nach dem Extrudieren gibt.

7. Das Verfahren gemäß irgendeinem der Ansprüche 1-6, wobei ein Katalysatorquencher zu dem Reaktionsprodukt vor dem Filtern hinzugegeben wird.

8. Das Verfahren gemäß Anspruch 7, wobei der Quencher mit dem geschmolzenen Reaktionsprodukt für 0,3 bis 5 Minuten vor dem Filtern gemischt wird.

9. Das Verfahren gemäß irgendeinem der Ansprüche 7-8, wobei der Katalysatorquencher ein Säurequencher ist.

10. Das Verfahren gemäß irgendeinem der Ansprüche 7-9, weiterhin umfassend einen Inline -Mischer, wobei das Mischen nach dem Quenchen und vor dem Filtern geschieht.

11. Das Verfahren gemäß irgendeinem der Ansprüche 1-10, wobei das Filtern einen Filter mit einer Porengröße von 2,5 bis 50 Mikrometern verwendet.

12. Das Verfahren gemäß irgendeinem der Ansprüche 1-11, wobei das Extrudieren extrudieren mit einem Additiv umfasst, und wobei das Additiv ein Färbemittel, einen Hitzestabilisator, ein Antioxidans, ein UV-absorbierendes Additiv, ein Antistatikum, einen Schlagmodifikationsmittel, einen Strömungsmodifikationsmittel, ein Trennmittel, ein Antibeschlagmittel, ein antimikrobielles Mittel, ein Flammschutzmittel, einen Füllstoff umfasst, oder eine Kombination, die eine oder mehrere der vorgenannten Komponenten umfasst.

13. Das Verfahren gemäß irgendeinem der Ansprüche 1-12, wobei das Extrudieren extrudieren mit einem Additiv umfasst und wobei das Additiv einen Hauptumfang von größer als oder gleich der Porengröße des Filters hat.

14. Das Verfahren gemäß irgendeinem der Ansprüche 1-13, wobei das Extrudieren das Extrudieren mit einem Additiv umfasst, und wobei das Additiv einen mineralischen Füllstoff, Glas, Metall, KSS, TSAN, oder eine Kombination mindestens eine der vorgenannten Komponenten umfasst.

15. Das Verfahren gemäß irgendeinem der Ansprüche 1-14, weiterhin umfassend das Pelletieren der extrudierten Polycarbonat-Zusammensetzung.

16. Das Verfahren gemäß irgendeinem der Ansprüche 1-15, wobei das Schmelzpolymerisieren in der Anwesenheit eines Katalysators geschieht.

17. Das Verfahren gemäß irgendeinem der Ansprüche 1-16, wobei das Schmelzpolymerisieren in einer Reihe von Polymerisationsstadien geschieht.

18. Das Verfahren gemäß Anspruch 17, wobei die Polymerisationsstadien steigende Temperatur- und Vakuum-Stufen haben.

19. Das Verfahren gemäß irgendeinem der Ansprüche 1-18, ferner umfassend die Strangbildung und das Pelletieren der Polycarbonat-Zusammensetzung.

20. Das Verfahren gemäß irgendeinem der Ansprüche 1-19, wobei die Polycarbonat-Zusammensetzung opak ist.

## Revendications

1. Procédé de polymérisation en fusion pour la fabrication d'une composition de polycarbonate comprenant, dans l'ordre suivant :
la polymérisation en fusion d'un réactif dihydroxy et d'un composé carbonate pour produire un produit de réaction fondu ;
la trempe du produit de réaction fondu en amont de toutes les extrudeuses ;
la filtration du produit de réaction fondu dans un filtre de fusion ;
l'introduction d'un additif pour former un mélange ; et
l'extrusion du mélange pour former une composition de polycarbonate.

2. Procédé selon la revendication 1, comprenant en outre l'élimination de gels de polycarbonate ayant une taille de particule supérieure ou égale à 0,5 micromètre du produit de réaction avant toute extrusion.

3. Procédé selon la revendication 2, dans lequel les gels de polycarbonate sont éliminés du courant entier comprenant le produit de réaction fondu.

4. Procédé selon l'une quelconque des revendications 1 à 2, dans lequel la polymérisation en fusion comprend la séparation d'un courant de produit de réaction fondu en un premier courant parallèle et un deuxième courant parallèle ;
dans lequel le premier courant parallèle est au moins l'un parmi (i) filtré avant toute extrusion et (ii) des gels de polycarbonate ayant une taille de particule supérieure ou égale à 0,5 micromètre sont éliminés en amont de toutes les extrudeuses ; et
dans lequel le deuxième courant parallèle est filtré au moins l'un parmi (i) avant toute extrusion et (ii) après extrusion.

5. Procédé selon la revendication 4, dans lequel le deuxième courant parallèle est filtré après extrusion.

6. Procédé selon l'une quelconque des revendications 1 à 5, dans lequel il n'y a pas d'étape de filtration supplémentaire après l'extrusion.

7. Procédé selon l'une quelconque des revendications 1 à 6, dans lequel un extincteur de catalyseur est ajouté au produit de réaction avant la filtration.

8. Procédé selon la revendication 7, dans lequel l'extincteur est mélangé avec le produit de réaction fondu pendant 0,3 à 5 minutes avant la filtration.

9. Procédé selon l'une quelconque des revendications 7 à 8, dans lequel l'extincteur de catalyseur est un extincteur acide.

10. Procédé selon l'une quelconque des revendications 7 à 9, comprenant en outre le mélange dans un mélangeur en ligne, dans lequel le mélange se produit après l'extinction et avant la filtration.

11. Procédé selon l'une quelconque des revendications 1 à 10, dans lequel la filtration utilise un filtre de 2,5 à 50 micromètres de taille de pore.

12. Procédé selon l'une quelconque des revendications 1 à 11, dans lequel l'extrusion comprend l'extrusion avec un additif, et dans lequel l'additif comprend un colorant, un stabilisateur thermique, un antioxydant, un additif absorbant les UV, un agent antistatique, un modificateur de la résistance aux chocs, un modificateur d'écoulement, un agent de démoulage, un additif antibuée, un agent antimicrobien, un retardateur de flamme, une charge, ou une combinaison comprenant un ou plusieurs des éléments précédents.

13. Procédé selon l'une quelconque des revendications 1 à 12, dans lequel l'extrusion comprend l'extrusion avec un additif, et dans lequel l'additif a un grand diamètre supérieur ou égal à la taille de pore du filtre.

14. Procédé selon l'une quelconque des revendications 1 à 13, dans lequel l'extrusion comprend l'extrusion avec un additif, et dans lequel l'additif comprend une charge minérale, du verre, du métal, KSS, TSAN, ou une combinaison comprenant au moins l'un des éléments précédents.

15. Procédé selon l'une quelconque des revendications 1 à 14, comprenant en outre le pastillage de la composition de polycarbonate extrudée.

16. Procédé selon l'une quelconque des revendications 1 à 15, dans lequel la polymérisation en fusion se produit en présence d'un catalyseur.

17. Procédé selon l'une quelconque des revendications 1 à 16, dans lequel la polymérisation en fusion se produit dans une série d'étapes de polymérisation.

18. Procédé selon la revendication 17, dans lequel la série d'étapes de polymérisation a des niveaux croissants de température et de vide.

19. Procédé selon l'une quelconque des revendications 1 à 18, comprenant en outre le toronage et le pastillage de la composition de polycarbonate.

20. Procédé selon l'une quelconque des revendications 1 à 19, dans lequel la composition de polycarbonate est opaque.
